# FASCICULE DE BREVET EUROPEEN

(11) **EP 4 229 286 B1**
(45) Date de publication et mention de la délivrance du brevet: **02.10.2024**
(21) Numéro de dépôt: 21807165.2
(22) Date de dépôt: 08.10.2021
(51) Int. Cl.: F02C 7/36, F02K 3/06, F02C 7/04

(54) **SYSTÈME PROPULSIF AÉRONAUTIQUE AYANT UN RENDEMENT PROPULSIF AMÉLIORÉ**
AERONAUTISCHES ANTRIEBSSYSTEM MIT VERBESSERTER ANTRIEBSEFFIZIENZ
AERONAUTICAL PROPULSION SYSTEM WITH IMPROVED PROPULSION EFFICIENCY

(30) Priorité: 16.10.2020 FR 2010640
(43) Date de publication de la demande: 23.08.2023
(73) Titulaire: SAFRAN AIRCRAFT ENGINES, 75015 Paris (FR); Safran Transmission Systems, 92700 Colombes (FR)
(72) Inventeur: FRANTZ, Caroline Marie, 77550 MOISSY-CRAMAYEL (FR); CHARIER, Gilles Alain Marie, 77550 MOISSY-CRAMAYEL (FR); FOGLIA, Matthieu Bruno, François, 77550 MOISSY-CRAMAYEL (FR); SIMON, Adrien Louis, 77550 MOISSY-CRAMAYEL (FR)
(74) Mandataire: Regimbeau
(86) Numéro de dépôt international: PCT/FR2021/051755
(87) Numéro de publication internationale: WO 2022/079378

(56) Documents cités:
- EP-A1- 3 045 772
- EP-B1- 3 045 772
- WO-A2-2015/012923
- D. E. GRAY: "Energy efficient engine preliminary design and integration studies", NASA CR-135396, 1 November 1978 (1978-11-01), pages 1 - 366, XP055280688, Retrieved from the Internet <URL:http://ntrs.nasa.gov/archive/nasa/casi.ntrs.nasa.gov/19790003913.pdf> [retrieved on 20160615]

## Description

### DOMAINE DE L'INVENTION

La présente invention concerne le domaine des systèmes propulsifs aéronautiques, et plus précisément des systèmes propulsifs à double flux présentant un taux de dilution élevé, voire très élevé, et un haut rendement propulsif.

### ETAT DE LA TECHNIQUE

Un système propulsif à double flux comprend généralement, d'amont en aval dans le sens de l'écoulement des gaz, une soufflante, un espace annulaire d'écoulement primaire et un espace annulaire d'écoulement secondaire. La masse d'air aspirée par la soufflante est donc divisée en un flux primaire, qui circule dans l'espace d'écoulement primaire, et en un flux secondaire, qui est concentrique avec le flux primaire et circule dans l'espace d'écoulement secondaire. La soufflante (ou hélice) peut être carénée et logée dans un carter de soufflante ou en variante non carénée du type USF (acronyme anglais de Unducted Single Fan, pour soufflante unique non carénée). Les aubes de soufflante peuvent être fixes ou présenter un calage variable, le calage étant ajusté en fonction des phases de vol par un mécanisme de changement de pas.

L'espace d'écoulement primaire traverse un corps primaire comprenant un ou plusieurs étages de compresseurs, par exemple un compresseur basse pression (ou booster) et un compresseur haute pression, une chambre de combustion, un ou plusieurs étages de turbines, par exemple une turbine haute pression et une turbine basse pression, et une tuyère d'échappement des gaz. Typiquement, la turbine haute pression entraine en rotation le compresseur haute pression par l'intermédiaire d'un premier arbre, dit arbre haute pression, tandis que la turbine basse pression entraine en rotation le compresseur basse pression et la soufflante par l'intermédiaire d'un deuxième arbre, dit arbre basse pression. L'arbre basse pression est généralement logé dans l'arbre haute pression.

Afin d'améliorer le rendement propulsif du système propulsif et de réduire sa consommation spécifique ainsi que le bruit émis par la soufflante, il a été proposé des systèmes propulsifs présentant un taux de dilution (bypass ratio en anglais), c'est-à-dire le rapport entre le débit du flux secondaire et le débit du flux primaire, élevé. Par taux de dilution élevé, on comprendra ici un taux de dilution supérieur ou égal à 10, par exemple compris entre 10 et 80 inclus. Pour atteindre de tels taux de dilution, la soufflante est découplée de la turbine basse pression, permettant ainsi d'optimiser indépendamment leur vitesse de rotation respective. Généralement, le découplage est réalisé à l'aide d'un réducteur tel qu'un mécanisme de réduction épicycloïdal ou planétaire, placé entre l'extrémité amont de l'arbre basse pression et la soufflante. La soufflante est alors entrainée par l'arbre basse pression par l'intermédiaire du mécanisme de réduction et d'un arbre supplémentaire, dit arbre de soufflante, qui est fixé entre le mécanisme de réduction et le disque de la soufflante.

Ce découplage permet ainsi de réduire la vitesse de rotation et le rapport de pression de la soufflante et d'augmenter la puissance extraite par la turbine basse pression. En effet, l'efficacité globale des systèmes propulsifs aéronautiques est conditionnée au premier ordre par le rendement propulsif, qui est favorablement influencé par une minimisation de la variation d'énergie cinétique de l'air à la traversée du système propulsif. Dans un système propulsif à taux de dilution élevé, l'essentiel du débit générant l'effort propulsif est constitué par le flux secondaire du système propulsif, l'énergie cinétique du flux secondaire étant majoritairement affecté par la compression qu'il subit lors de la traversée de la soufflante, qui joue le rôle d'un compresseur basse pression. Le rendement propulsif et le rapport de pression de la soufflante sont donc liés : plus le rapport de pression de la soufflante est faible, meilleur sera le rendement propulsif.

Au-delà de son impact majeur sur le rendement propulsif, le choix du rapport de pression de la soufflante influence également diverses caractéristiques technologiques du système propulsif, dont le diamètre de la soufflante (et par extension les dimensions externes du système propulsif et de sa nacelle, masse et traînée), le régime de rotation de la soufflante et le rapport de réduction du mécanisme de réduction.

Toutefois, (i) plus le rapport de réduction augmente et plus son encombrement radial augmente de sorte que le mécanisme de réduction s'intègre difficilement sous la veine d'écoulement primaire et (ii) plus la vitesse de l'arbre basse pression est élevée, plus la vitesse du booster, qui est entrainé par l'arbre basse pression, est élevée et plus le rayon moyen du booster doit être bas pour limiter la vitesse périphérique en sommet des aubages du booster.

Ces deux contraintes combinées conduisent à un canal d'entrée de la veine d'écoulement primaire (habituellement désigné par sa forme en col de cygne) en amont du booster présentant une pente d'autant plus importante que l'encombrement radial du mécanisme de réduction est élevé et le rayon moyen du booster est bas. Il en résulte un accroissement des pertes aérodynamiques dans ce canal et une mauvaise alimentation du booster qui portent préjudice au rendement propulsif du système propulsif.

Actuellement, les mécanismes de réduction privilégiés sont du type réducteur épicycloïdal, dans lesquels la soufflante est entrainée par le porte-satellite, la couronne étant fixée au stator du moteur. De telles architectures permettent en effet d'atteindre des rapports de réduction plus élevés que les mécanismes de réduction du type planétaire (entrainement de la soufflante par la couronne). L'utilisation d'un réducteur épicycloïdal implique cependant de transférer l'huile du repère fixe du moteur vers le repère tournant du porte-satellites pour alimenter les paliers et dentures de ce réducteur.

Les documents "D. E. Gray: Energy efficient engine preliminary design and intégration studies, NASA CR-135396, 1 novembre 1978" et EP 3 045 772 A1 décrivent des systèmes propulsifs de l'art antérieur.

### EXPOSE DE L'INVENTION

Un but de l'invention est de proposer un système propulsif aéronautique, tel qu'une turbomachine à double flux dont la soufflante est carénée, avec ou sans calage variable des aubes de soufflante, ou tel qu'un système propulsif non caréné du type USF, présentant un taux de dilution élevé et un rendement propulsif amélioré et dont le système de transmission à fort taux de réduction peu encombrant et simplifié.

Il est à cet effet proposé, selon un premier aspect de l'invention un système propulsif aéronautique selon la revendication 1 comprenant :
- un arbre d'entrainement mobile en rotation autour d'un axe de rotation,
- une soufflante,
- un arbre de soufflante configuré pour entrainer la soufflante en rotation autour de l'axe de rotation,
- un mécanisme de réduction couplant l'arbre d'entrainement et l'arbre de soufflante,
- une section de compression entrainée en rotation par l'arbre d'entrainement,
- un canal d'entrée qui s'étend entre la soufflante et la section de compression, le canal d'entrée comprenant une virole interne et une virole externe délimitant ensemble une veine d'entrée d'air dans la section de compression, la virole interne présentant un rayon minimal prédéterminé.

Par ailleurs, le mécanisme de réduction comprend deux étages de réduction comportant au moins deux satellites répartis circonférentiellement autour de l'axe de rotation, chaque satellite comprenant une première portion engrenée avec l'arbre d'entrainement et une deuxième portion engrenée avec l'arbre de soufflante. Chaque satellite est monté fixe par rapport à la virole interne du carter d'entrée et chaque satellite présente un rayon maximal prédéterminé, ledit rayon maximal étant supérieur au rayon minimal de la virole interne du canal d'entrée de sorte que la veine d'entrée d'air s'étend au moins partiellement entre les deux satellites.

Le système propulsif aéronautique peut comprendre une turbomachine à double flux dont la soufflante est carénée, avec ou sans calage variable des aubes de soufflante, ou un système propulsif non caréné du type USF.

Certaines caractéristiques préférées mais non limitatives du système propulsif sont les suivantes, prises individuellement ou en combinaison :
- le carter d'entrée présente une entrée adjacente à la soufflante et une sortie adjacente à la section de compression, une section de la virole externe du carter d'entrée dans un plan radial à l'axe de rotation étant sensiblement circulaire au niveau de l'entrée ;
- un passage de la veine d'entrée d'air est discontinu autour de l'axe de rotation ;
- le mécanisme de réduction est logé dans un carter, ledit carter étant monobloc avec la virole interne du canal d'entrée ;
- le carter du mécanisme de réduction comprend, au niveau de chaque satellite, une série de renflements qui sont chacun configurés pour loger un satellite associé ;
- les renflements sont raccordés deux à deux par des portions de carter en secteur d'anneau ;
- le carter du mécanisme de réduction est raccordé à la virole externe par l'intermédiaire de bras support s'étendant depuis les renflements ;
- les renflements présentent une forme de secteur d'anneau dont un rayon est supérieur au rayon des portions de carter qui s'étendent entre les renflements ;
- la partie de la virole interne du carter d'entrée qui s'étend entre deux satellites adjacents présente un bossage en aval de l'entrée ;
- le bossage s'étend jusqu'à la section de compression ;
- le système propulsif comprend en outre un joint hydraulique tournant multipassage positionné au niveau de l'arbre de soufflante, en amont du mécanisme de réduction ;
- les satellites sont montés sur un porte-satellites et le système propulsif comprend en outre un réservoir d'huile et au moins une canalisation passant par le porte-satellites et configurée pour alimenter en huile le mécanisme de réduction ;
- le mécanisme de réduction présente un rapport de réduction supérieur ou égal à 2, de préférence supérieur ou égal à 2,2 dans le cas d'une soufflante carénée et supérieur ou égal à 5 dans le cas d'une soufflante non carénée et/ou
- le système propulsif présente un taux de dilution supérieur ou égal à 10 et inférieur ou égal à 80.

Selon un deuxième aspect, l'invention propose un aéronef comprenant un système propulsif aéronautique conforme au premier aspect.

### DESCRIPTION DES FIGURES

D'autres caractéristiques, buts et avantages de l'invention ressortiront de la description qui suit, qui est purement illustrative et non limitative, et qui doit être lue en regard des dessins annexés sur lesquels :
La figure 1 illustre de façon schématique un exemple de système propulsif aéronautique comprenant une soufflante carénée à calage variable conforme à un mode de réalisation de l'invention.
La figure 2 illustre de façon schématique un exemple de système propulsif aéronautique comprenant une soufflante non carénée type USF conforme à un mode de réalisation de l'invention.
La figure 3a est une vue en perspective partielle et schématique d'un premier exemple de mécanisme de réduction et de l'entrée d'air d'un système propulsif aéronautique conforme à l'invention.
La figure 3b est une vue schématique et en coupe du système propulsif de la figure 3a, sur laquelle a été représenté en outre le cône d'entrée du système propulsif.
La figure 4a est une vue en perspective partielle et schématique d'un deuxième exemple de mécanisme de réduction et de l'entrée d'air d'un système propulsif aéronautique conforme à l'invention.
La figure 4b est une vue schématique et en coupe du système propulsif de la figure 4a, sur laquelle a été représenté en outre le cône d'entrée du système propulsif.
La figure 5 est une vue en coupe, partielle et schématique illustrant, dans quatre quadrants, un mécanisme de réduction planétaire biétage (en haut à gauche), un mécanisme de réduction épicycloïdal simple étage (en haut à droite), un mécanisme de réduction épicycloïdal biétage (en bas à gauche) et le mécanisme de réduction de l'invention (en bas à droite), avec leur veine d'entrée respective, ces quatre mécanismes de réduction ayant tous un même rapport de réduction.

Sur l'ensemble des figures, les éléments similaires portent des références identiques.

### DESCRIPTION DETAILLEE DE L'INVENTION

Le système propulsif 1 comprend, de manière conventionnelle, une soufflante 2 et un corps primaire. Le corps primaire comprend, dans le sens d'écoulement des gaz dans le système propulsif 1, un canal d'entrée 3 s'étendant immédiatement en aval de la soufflante 2, un compresseur basse pression 4 (ou booster 4), un compresseur haute pression 5, une chambre de combustion 6, une turbine haute pression 7, une turbine basse pression 9 et une tuyère d'échappement des gaz. La turbine haute pression 7 entraine en rotation le compresseur haute pression 5 par l'intermédiaire d'un arbre haute pression 8 tandis que la turbine basse pression 9 entraine en rotation le compresseur basse pression 4 et la soufflante 2 par l'intermédiaire d'un arbre basse pression 10.

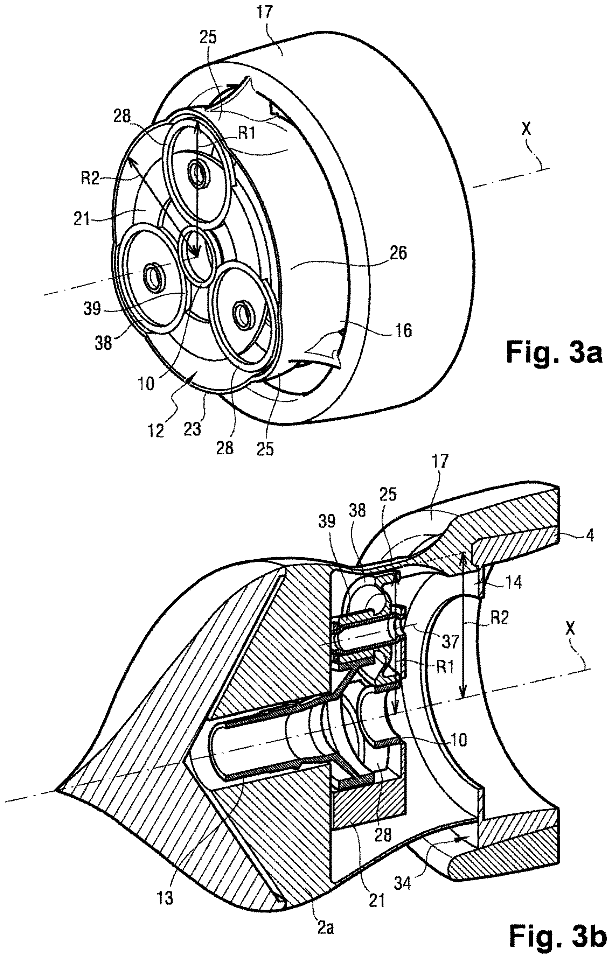

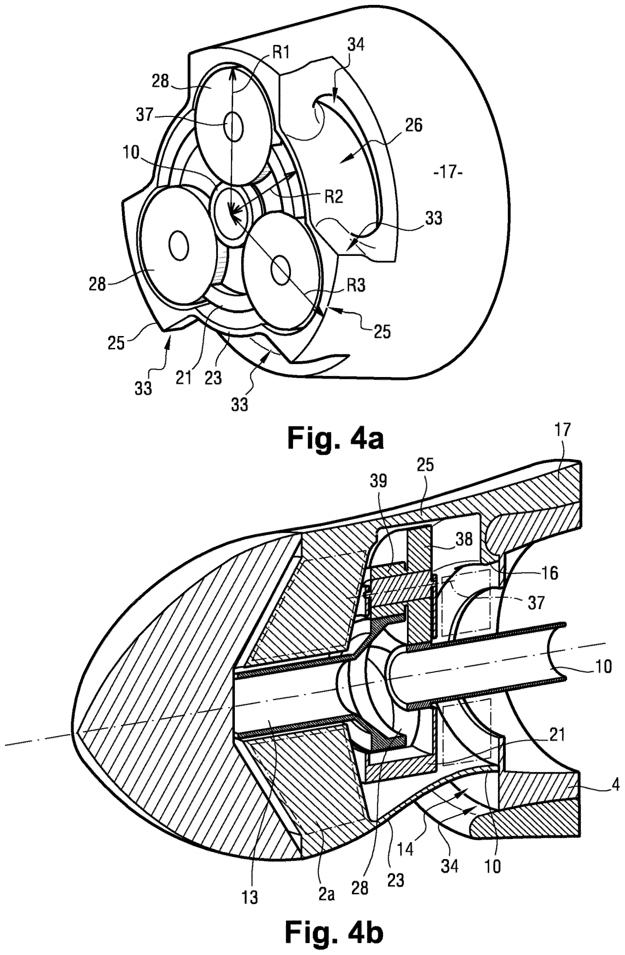

La soufflante 2 comprend un disque de soufflante 2a (voir notamment figures 3b et 4b) pourvu d'aubes de soufflante 11 à sa périphérie qui, lorsqu'elles sont mises en rotation, entraînent le flux d'air dans les espaces d'écoulement primaire et secondaire du système propulsif 1.

Le booster 4 comprend au moins un étage de compression comprenant une roue 14 d'aubes mobiles (rotor) entrainée par l'arbre basse pression 10 et tournant devant une série d'aubes fixes (stators, ou redresseurs) réparties circonférentiellement autour de l'axe X. Le cas échéant, le booster 4 peut comprendre au moins deux étages de compression.

Le canal d'entrée 3 s'étend immédiatement en aval de la soufflante 2. Il présente une entrée 18, adjacente au pied 17 des aubes de soufflante 11, à l'aplomb du bec de séparation 19 de l'espace d'écoulement primaire et de l'espace d'écoulement secondaire et une sortie 20 adjacente au booster 4. Le canal d'entrée 3 présente la forme générale d'un col de cygne, de sorte que l'entrée 18 est radialement plus éloignée de l'axe de rotation X que la sortie 20. Le canal d'entrée 3 comprend, de manière connue en soi, une rangée d'aubes fixes réparties circonférentiellement autour de l'axe X entre une virole interne 16 et une virole externe 17, qui délimitent ensemble une veine d'entrée d'air dans le booster 4. La virole interne 16 et la virole externe 17 du canal d'entrée 3 s'étendent circonférentiellement autour de l'axe de rotation X et sont fixes dans le repère moteur. Typiquement, la virole interne 16 et la virole externe 17 peuvent être raccordées à un carter du moteur, tel que le carter d'entrée 3.

L'invention s'applique à tout type de système propulsif 1 aéronautique à double flux, que la soufflante 2 soit carénée ou non carénée, à aubes fixes ou à calage variable.

Dans la présente demande, l'amont et l'aval sont définis par rapport au sens d'écoulement normal du gaz dans la soufflante et à travers le système propulsif. Par ailleurs, La direction axiale correspond à la direction de l'axe de rotation X et une direction radiale est une direction perpendiculaire à cet axe de rotation X et passant par lui. Par ailleurs, la direction circonférentielle (ou latérale) correspond à une direction perpendiculaire à l'axe de rotation X et ne passant pas par lui. Sauf précision contraire, interne (respectivement, intérieur) et externe (respectivement, extérieur), respectivement, sont utilisés en référence à une direction radiale de sorte que la partie ou la face interne d'un élément est plus proche de l'axe de rotation X que la partie ou la face externe du même élément.

Le système propulsif 1 présente un taux de dilution élevé. Par taux de dilution élevé, on comprendra ici un taux de dilution supérieur ou égal à 10, par exemple compris entre 10 et 80. Pour cela, la soufflante 2 est découplée de la turbine basse pression 9 pour optimiser indépendamment leur vitesse de rotation respective à l'aide d'un mécanisme de réduction 12 placé entre l'extrémité amont (par rapport au sens d'écoulement des gaz dans le système propulsif 1) de l'arbre basse pression 10 et la soufflante 2. La soufflante 2 est alors entrainée par l'arbre basse pression 10 par l'intermédiaire du mécanisme de réduction 12 et d'un arbre de soufflante 13, qui est fixé entre le mécanisme de réduction 12 et le disque 2a de la soufflante 2. L'arbre de soufflante 13 est mobile en rotation autour d'un axe de rotation X coaxial à l'axe de rotation X de l'arbre basse pression 10.

Pour calculer le taux de dilution, le débit du flux secondaire et le débit du flux primaire sont mesurés lorsque le système propulsif 1 est stationnaire en régime de décollage dans une atmosphère standard (telle que définie par le manuel de l'Organisation de l'aviation civile internationale (OACI), Doc 7488/3, 3e édition) et au niveau de la mer. Dans ce qui suit, tous les paramètres seront mesurés dans ces conditions.

Afin d'améliorer le rendement propulsif du système propulsif 1, le mécanisme de réduction est biétage et statique. Plus précisément, le mécanisme de réduction 12 comprend deux étages de réduction, chaque étage comportant au moins deux satellites 28 répartis circonférentiellement autour de l'axe de rotation X et comprenant une première portion 38 engrenée avec l'arbre basse pression 10 et une deuxième portion 39 engrenée avec l'arbre de soufflante 13. Les premières portions 38 des satellites 28 s'étendent dans un même plan, dit premier plan, et forment le premier étage du mécanisme de réduction 12 tandis que les deuxièmes portions 39 des satellites 28 s'étendent dans un même plan, dit deuxième plan, qui est parallèle à celui des premières portions 38, et forment le deuxième étage du mécanisme de réduction 12. Le deuxième plan est décalé axialement par rapport au premier plan. Par exemple, le mécanisme de réduction 12 peut comprendre trois satellites 28 ou plus.

Les satellites 28 sont montés fixes par rapport à la virole interne 16 du canal d'entrée 3 et présentent chacun un rayon maximal R1 prédéterminé, qui correspond au rayon d'encombrement des satellites 28. De plus, le rayon maximal R1 des satellites 28 est supérieur au rayon minimal R2 de la virole interne 16 du canal d'entrée 3 de sorte que la veine d'entrée d'air s'étend au moins partiellement entre deux satellites 28 adjacents. Par rayon maximal R1 des satellites 28, on comprendra ici la distance maximale, dans un plan radial à l'axe de rotation X, entre l'axe de rotation X et la surface radiale externe des satellites 28. Ici, le rayon maximal R1 est donc mesuré au niveau de la première portion 38 des satellites 28, dont le diamètre est plus grand que celui des deuxièmes portions 39. Par ailleurs, par rayon minimal R2 de la virole interne 16 du canal d'entrée 3, on comprendra la distance minimale, dans un plan radial à l'axe de rotation X, entre l'axe de rotation X et la virole interne 16, à l'entrée 18 de la virole interne 16 3. Plus précisément, le rayon minimal R2 de la virole interne 16 est mesuré au niveau de la partie la plus en amont du bec de séparation 19.

Le mécanisme de réduction 12 ne comprend donc pas de composant encombrant radialement qui est mobile autour de l'axe de rotation X, puisque l'arbre de soufflante 13 est engrené directement sur la deuxième portion 39 des satellites 28 et que les satellites 28 sont statiques dans le repère moteur (étant fixés sur la virole interne 16 du carter d'entrée 3). Il en découle que le mécanisme de réduction 12 ne comprend pas de couronne ni de porte-satellites 21 mobile autour de l'axe de rotation X. Les efforts centrifuges subis par le mécanisme de réduction 12 sont donc beaucoup plus faibles que dans les mécanismes de réduction type planétaire ou épicycloïdal.

De plus, la veine d'entrée d'air passant en partie entre les satellites 28, le rayon minimal R2 de sa virole interne 16 est plus bas au niveau de l'entrée 18 que dans l'art antérieur de sorte que la pente du canal d'entrée 3 en amont du booster 4 est plus douce, ce qui améliore l'alimentation du booster 4. En particulier, le rayon minimal R2 est inférieur au maximal R1 des satellites 28. Dans une forme de réalisation, le rayon minimal R2 est au plus égal à 90 % du rayon maximal R1 des satellites 28, de préférence au plus égal à 80 % de ce du rayon maximal R1.

L'utilisation d'un mécanisme de réduction 12 biétage permet en outre d'atteindre des rapports de réduction élevés, voire très élevés, pour un encombrement radial plus faible que dans les moteurs de l'art antérieur. Cette diminution de l'encombrement radial du mécanisme de réduction 12, à iso rapport de réduction, a pour effet d'adoucir encore davantage la pente du canal d'entrée 3 de la veine primaire en amont du booster 4. Ainsi, le choix d'un mécanisme de réduction 12 biétage et statique améliore doublement l'alimentation du booster 4 et donc le rendement propulsif du système de propulsion 1.

Le cas échéant, il est également possible de choisir de limiter l'augmentation de l'encombrement axial du couple réducteur compresseur en conservant une pente de canal d'entrée élevée, en réduisant la distance entre le réducteur et le compresseur.

Le mécanisme de réduction 12 est logé dans un carter 23 qui est monobloc avec la virole interne 16 du canal d'entrée 3. Dans la mesure où le rayon minimal R2 de la virole interne 16 est inférieur au rayon maximal R1 des satellites 28 pour permettre le passage de la veine d'air entre les satellites 28 adjacents, le carter 23 du mécanisme de réduction 12 n'est pas cylindrique.

Plus précisément, le carter 23 du mécanisme de réduction 12 comprend, au niveau des satellites 28, une série de renflements 25 qui sont chacun configurés pour loger un satellite 28 associé, les renflements 25 étant raccordés deux à deux par des portions 26 de carter en secteur d'anneau. Par secteur d'anneau, on comprendra ici que ces portions 26 du carter 23 ont une section, dans un plan radial à l'axe de rotation X, qui est courbe et correspond à un arc de cercle. Les portions 26 en secteur d'anneau ont toute un même rayon. Le cas échéant, le rayon des portions 26 en secteur d'anneau est égal au rayon minimal R2 de la virole interne 16.

Dans une première forme de réalisation illustrée sur les figures 4a et 4b, l'entrée 18 du canal d'entrée 3 est sectorisée, c'est-à-dire qu'elle n'est par continue circonférentiellement. L'entrée 18 comprend alors plusieurs sections circonférentielles, séparées deux à deux par un renflement 25 du carter 23 du mécanisme de réduction 12 et qui forment chacune un passage pour la veine d'écoulement.

Pour cela, dans un mode de réalisation, les renflements 25 présentent une forme de secteur d'anneau dont le rayon R3 est supérieur à celui des portions 26 du carter 23 qui s'étendent entre les renflements 25. Dans ce mode de réalisation, le rayon R3 des renflements 25 peut être sensiblement égal à celui de la virole externe 17 du carter 23 d'entrée 3. Les renflements 25 sont alors raccordés aux portions en secteur d'anneau adjacentes par deux parois 33 qui s'étendent sensiblement suivant la direction d'écoulement du flux à l'entrée du canal 3. Les parois 33 peuvent être planes ou en variante, comme illustré sur la figure 4a, courbes de sorte à former successivement dans le sens d'écoulement des gaz une section convergente puis divergente pour l'écoulement, à la manière d'une tuyère de Laval. L'entrée 18 du canal d'entrée est alors formée par les passages 34 qui sont chacun délimités par une portion 26 du carter 23 en secteur d'anneau et les parois 33 s'étendant de part et d'autre de cette portion 26. Typiquement, dans le cas d'un mécanisme de réduction 12 comprenant trois satellites 28, le carter 23 comprend trois portions 26 en forme de secteur d'anneau formant, avec les trois paires de parois 33 s'étendant de part et d'autre de chaque satellite 28, trois passages 34 circonférentiels pour l'entrée de la veine d'air dans le canal d'entrée 3.

En variante, dans une deuxième forme de réalisation illustrée en figures 3a et 3b, l'entrée 18 du canal d'entrée 3 est continue sur toute sa circonférence autour de l'axe de rotation X.

Dans cette forme de réalisation, le mécanisme de réduction 12 comprend des renflements 25 sensiblement courbes dont la forme et les dimensions sont ajustées à la forme et aux dimensions des satellites 28. Le carter 23 est en outre raccordé à la virole externe 17 par l'intermédiaire de bras support 36 s'étendant depuis les renflements 25. Typiquement, le système de propulsion 1 peut comprendre autant de bras support 36 que de satellites 28, chaque bras support 36 s'étendant depuis le sommet d'un renflement 25 qui loge un satellite 28. L'entrée de la veine d'air dans le canal d'entrée 3 est donc formée par un unique passage 34 circonférentiel continu autour de l'axe de rotation X. La virole externe 17 du carter 23 d'entrée 3 est donc sensiblement circulaire au niveau des renflements 25 tandis que la virole interne 16 est non cylindrique.

La présence des renflements 25 est susceptible de modifier la vitesse tangentielle du flux d'air à l'entrée du booster 4. Dans une forme de réalisation, la virole interne 16 comprend alors un bossage 40 en aval de l'entrée 18, dans le prolongement d'au moins une portion 26 du carter 23 du mécanisme de réduction 12 qui s'étend entre deux satellites 28 adjacents, par exemple dans le prolongement des portions 26 du carter 23 en secteur d'anneau. Les bossages 40 peuvent s'étendre sur toute la longueur du canal d'entrée 3 ou en variante sur une partie seulement du canal d'entrée 3.

Dans une forme de réalisation, la virole interne 16 comprend autant de bossages 40 qu'il y a de satellites 28, chaque bossage 40 s'étendant dans le prolongement de la portion 26 du carter 23 positionnée entre deux satellites adjacents.

Un rapport de réduction élevé permet de réduire la vitesse de rotation et le rapport de compression de la soufflante 2 et d'optimiser le dimensionnement de la turbine basse pression 9. Le rendement propulsif du système propulsif 1 est donc amélioré.

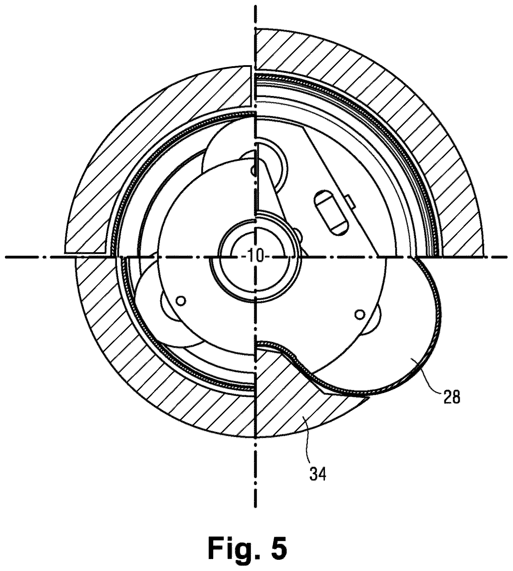

A titre de comparaison, la figure 5 illustre l'encombrement radial obtenu pour quatre mécanismes de réduction de technologie différente mais présentant tous un même rapport de réduction avec, dans le sens des aiguilles d'une montre en partant du quadrant en haut à gauche de la figure 5, un mécanisme de réduction planétaire biétage, un mécanisme de réduction épicycloïdal, un mécanisme de réduction 12 biétage et statique et un mécanisme de réduction épicycloïdal biétage. Il ressort de cette comparaison que le mécanisme de réduction présentant localement l'encombrement radial le plus faible, pour un même rapport de réduction, est le mécanisme de réduction 12 biétage statique, grâce à l'espace libéré entre les satellites 28 fixes pour le passage 34 de la veine d'air.

Le rapport de réduction du mécanisme de réduction biétage planétaire est au moins égal à 2.

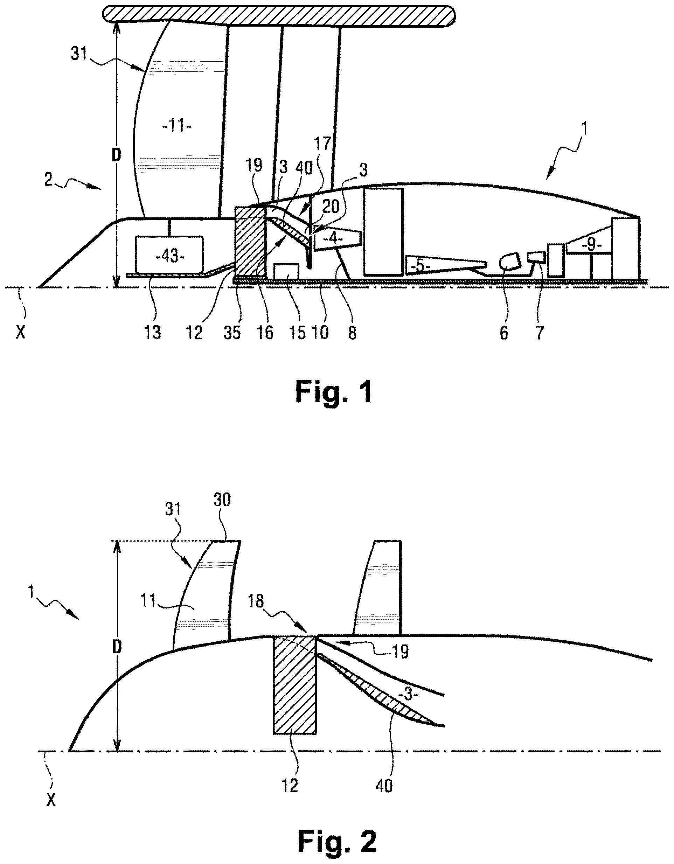

Dans le cas d'un système propulsif 1 comprenant une soufflante 2 carénée (Figure 1), et le cas échéant des aubes de soufflante 11 à calage variable, le rapport de réduction supérieur ou égal à 2,2, par exemple entre 2,2 et 6.

Dans le cas d'un système propulsif 1 comprenant une soufflante 2 non carénée (Figure 2), par exemple du type USF, le rapport de réduction supérieur ou égal à 5, par exemple entre 5 et 9. Par soufflante du type USF, on comprendra ici une turbomachine d'aéronef comprenant une soufflante 2 (hélice) non carénée, un générateur de gaz destiné à entrainer la soufflante 2 non carénée en rotation autour de l'axe longitudinal X et au moins un redresseur comprenant une pluralité d'aubes de stator à calage variable s'étendant suivant un axe radial perpendiculaire à l'axe longitudinal X depuis un carter fixe.

Dans une forme de réalisation, les satellites 28 sont montés mobile en rotation sur un porte-satellites 21 autour d'un axe de révolution 37 respectif, par exemple par l'intermédiaire de paliers lisses. Le porte-satellites 21 est en revanche fixe dans le repère moteur. Par exemple, le porte-satellites 21 peut être fixé sur la virole interne 16 du carter 23 d'entrée 3.

Chaque satellite 28 est symétrique de révolution par rapport à son axe de révolution 37. Le diamètre de la première portion 38 est différent du diamètre de la deuxième portion 39. Chaque portion 38, 39 des satellites 28 forme ainsi un étage du mécanisme de réduction 12. Plus précisément, la première portion 38 de chaque satellite 28 est cylindrique de révolution par rapport à son axe de révolution 37 et présente une surface radiale externe configurée pour coopérer avec la surface radiale externe de l'extrémité amont 35 de l'arbre basse pression 10. Pour cela, la surface radiale interne de la première portion 38 des satellites 28 comprend des moyens d'engrènement, typiquement des dents 29, configurées pour engrener une cannelure de l'extrémité amont 35 de l'arbre basse pression 10.

La deuxième portion 39 de chaque satellite 28 est cylindrique de révolution par rapport à son axe de révolution 37 et présente une surface radiale interne configurée pour coopérer avec la surface radiale externe de l'arbre de soufflante 13. Pour cela, la surface interne de cette deuxième portion 39 comprend également des moyens d'engrènement, typiquement des dents 29, configurées pour engrener une cannelure formée sur l'extrémité amont 35 de l'arbre basse pression 10.

Les moyens d'engrènement peuvent comprendre des dents droites, hélicoïdales ou en chevrons.

La première portion 38 et la deuxième portion 39 de chaque satellite 28 sont monobloc. Par exemple, la première portion 38 et la deuxième portion 39 d'un même satellite 28 peuvent être formées intégralement et en une seule pièce (monolithique). En variante, la première portion 38 et la deuxième portion 39 d'un même satellite 28 peuvent être assemblées.

Par ailleurs, les satellites 28 d'un même mécanisme de réduction 12 sont identiques en forme et en dimension.

En fonctionnement, la rotation de l'arbre basse pression 10 autour de l'axe de rotation X entraine donc en rotation la première portion 38 des satellites 28 autour de leur axe de révolution 37 (les axes de révolution 37 étant fixes par rapport à la virole interne 16 du carter 23 d'entrée 3), qui sont monoblocs avec leur deuxième portion 39 et entrainent donc, à une vitesse différente, l'arbre de soufflante 13 en rotation autour de cet axe de rotation X.

Les deuxièmes portions 39 des satellites 28 présentent un diamètre strictement inférieur au diamètre des premières portion 38. C'est en effet la différence de diamètres entre la première portion 38 et la deuxième portion 39 des satellites 28 qui permet d'obtenir des rapports de réduction plus élevés que dans un mécanisme de réduction 12 simple étage, pour un encombrement radial comparable. Il en découle que le diamètre de la première portion 38 et le diamètre de la deuxième portion 39 des satellites 28 peuvent ainsi être dimensionnés de sorte à atteindre un rapport de réduction supérieur ou égal à 2 avec un encombrement radial faible, permettant ainsi d'adoucir la pente du canal d'entrée 3.

Dans une forme de réalisation, les satellites 28 étant fixes dans le repère moteur, le joint hydraulique 15 peut être placé en amont du mécanisme de réduction 12 et raccordé fluidiquement au réservoir d'huile du groupe de lubrification par l'intermédiaire de canalisations passant par le porte-satellites 21. En d'autres termes, il n'est plus nécessaire de transférer l'huile du repère fixe du moteur vers un repère tournant du mécanisme de réduction 12 pour alimenter les paliers et dentures du mécanisme de réduction : il suffit en effet de transférer l'huile directement dans les canalisations passant au travers du porte-satellites 21, qui est fixe, et d'alimenter ensuite les paliers et dentures 29 du mécanisme de réduction 12 depuis ces canalisations.

La structure du joint hydraulique 15 et son alimentation sont donc simplifiées.

Le joint hydraulique 15 étant placé en amont du mécanisme de réduction 12, il est plus facile d'accès, ce qui simplifie les opérations de maintenance.

Dans cette première forme de réalisation, le joint hydraulique 15 peut par exemple être monté sur l'arbre de soufflante 13. Par exemple, le joint hydraulique 15 comprend une partie tournante montée sur l'arbre de soufflante 13 et une partie fixe montée sur le porte-satellites 21.

Optionnellement, le système propulsif 1 comprend en outre un mécanisme de changement de pas 43 configuré pour modifier l'angle de calage des aubes de soufflante 11 en fonction des phases de vol du système propulsif. Ce mécanisme de changement de pas 43 nécessite alors des moyens de lubrification (tels que des buses d'injection) alimentés en huile par le joint hydraulique 15. Le système propulsif 1 donc comprend en outre des servitudes 2 d'alimentation d'huile s'étendant entre la partie tournante du joint hydraulique 15 et le mécanisme de changement de pas 43. Ces servitudes sont solidaires en rotation de la partie tournante du joint hydraulique 15.

Avantageusement, le joint hydraulique 15 étant positionné en amont du mécanisme de réduction 12, la distance entre le joint hydraulique 15 et les moyens de lubrification est plus courte, donc plus simple, que dans l'art antérieur.

De plus, seule la portion du joint hydraulique 15 alimentant les moyens de lubrification du mécanisme de changement de pas 43 comprend une portion tournante, le joint hydraulique 15 étant alimenté via les canalisations passant par le porte-satellites 21, qui sont fixes.

Par ailleurs, dans le cas d'un système propulsif 1 comprenant une soufflante 2 carénée, le diamètre D de la soufflante 2 peut être compris entre 105 pouces (266.7 cm) et 135 pouces (342,9 cm). Dans le cas d'un système propulsif 1 comprenant une soufflante 2 non carénée, le diamètre D de la soufflante 2 peut être compris entre 150 pouces (381 cm) et 180 pouces (457,2 cm), par exemple de l'ordre de 167 pouces (424,18 cm). Par diamètre D de soufflante 2, on comprendra ici le double de la distance, dans un plan radial à l'axe de rotation X, mesurée entre l'axe de rotation X et le sommet 30 des aubes de soufflante 11 à l'intersection entre le bord d'attaque 31 le sommet 30 de l'aube 11. Par bord d'attaque 31, on comprendra ici le bord de l'aube 11 configuré pour s'étendre en regard de l'écoulement des gaz entrant dans la soufflante 2. Il correspond à la partie antérieure d'un profil aérodynamique qui fait face au flux d'air et qui divise l'écoulement d'air en un écoulement d'intrados et en un écoulement extrados. Le bord de fuite quant à lui correspond à la partie postérieure du profil aérodynamique, où se rejoignent les écoulements intrados et extrados.

De plus, pour ces diamètres D de soufflante 2 et régimes de rotation, le rapport de compression de la soufflante 2 carénée peut être compris entre 1.04 et 1.29 tandis que le rapport de pression de la soufflante 2 non carénée peut être compris entre 1.01 et 1.025. Le rapport de compression de la soufflante 2 est mesuré ici dans les mêmes conditions que le taux de dilution, c'est-à-dire lorsque le système propulsif 1 est stationnaire en régime de décollage dans une atmosphère standard (telle que définie par le manuel de l'Organisation de l'aviation civile internationale (OACI), Doc 7488/3, 3e édition) et au niveau de la mer.

Le taux de dilution du système propulsif 1 peut alors être compris entre 10 et 31 dans le cas d'une soufflante 2 carénée et entre 40 et 80 dans le cas d'une soufflante 2 non carénée.

La vitesse périphérique en tête des aubes de soufflante 11 (c'est-à-dire mesurée au niveau de leur sommet 30) en régime de décollage tel que défini ci-dessus est comprise entre 260 m/s et 330 m/s lorsque la soufflante 2 est carénée et est inférieure à 225 m/s lorsque la soufflante 2 est non carénée.

## Revendications

1. Système propulsif (1) aéronautique comprenant :
- un arbre d'entrainement (10) mobile en rotation autour d'un axe de rotation (X),
- une soufflante (2),
- un arbre de soufflante (13) configuré pour entrainer la soufflante en rotation autour de l'axe de rotation (X),
- un mécanisme de réduction (12) couplant l'arbre d'entrainement (10) et l'arbre de soufflante (13),
- une section de compression (4) entrainée en rotation par l'arbre d'entrainement (10),
- un canal d'entrée (3) qui s'étend entre la soufflante (2) et la section de compression (4), le canal d'entrée comprenant une virole interne (16) et une virole externe (17) délimitant ensemble une veine d'entrée d'air dans la section de compression (4), la virole interne (16) présentant un rayon minimal (R2) prédéterminé,
- le mécanisme de réduction (12) comprenant deux étages de réduction comportant au moins deux satellites (28) répartis circonférentiellement autour de l'axe de rotation (X), chaque satellite (28) comprenant une première portion (38) engrenée avec l'arbre d'entrainement (10) et une deuxième portion (39) engrenée avec l'arbre de soufflante (13),
- chaque satellite (28) étant monté fixe par rapport à la virole interne (16) du carter d'entrée (3), le système propulsif (1) étant **caractérisé en ce que**:
- chaque satellite (28) présente un rayon maximal (R1) prédéterminé, ledit rayon maximal (R1) étant supérieur au rayon minimal (R2) de la virole interne (16) du canal d'entrée (3) de sorte que la veine d'entrée d'air s'étend au moins partiellement entre les deux satellites (28).

2. Système propulsif selon la revendication 1, dans lequel le carter d'entrée (3) présente une entrée (18) adjacente à la soufflante (2) et une sortie (20) adjacente à la section de compression (4), une section de la virole externe (17) du carter d'entrée (3) dans un plan radial à l'axe de rotation (X) étant sensiblement circulaire au niveau de l'entrée (18).

3. Système propulsif selon l'une des revendications 1 ou 2, dans lequel un passage (34) de la veine d'entrée d'air est discontinu autour de l'axe de rotation (X).

4. Système propulsif selon la revendication 3, dans lequel le mécanisme de réduction (12) est logé dans un carter (26), ledit carter (23) étant monobloc avec la virole interne (16) du canal d'entrée (3).

5. Système propulsif selon la revendication 4, dans lequel le carter (23) du mécanisme de réduction (12) comprend, au niveau de chaque satellite (28), une série de renflements (25) qui sont chacun configurés pour loger un satellite (28) associé.

6. Système propulsif selon la revendication 5, dans lequel les renflements (25) sont raccordés deux à deux par des portions (26) de carter (23) en secteur d'anneau.

7. Système propulsif selon l'une des revendications 5 ou 6, dans lequel le carter (23) du mécanisme de réduction (12) est raccordé à la virole externe (17) par l'intermédiaire de bras support (36) s'étendant depuis les renflements (25).

8. Système propulsif selon l'une des revendications 6 ou 7, dans lequel les renflements (25) présentent une forme de secteur d'anneau dont un rayon (R3) est supérieur au rayon des portions (26) de carter (23) qui s'étendent entre les renflements (25).

9. Système propulsif selon l'une des revendications 1 à 8, dans lequel la partie de la virole interne (16) du carter (23) d'entrée (3) qui s'étend entre deux satellites (28) adjacents présente un bossage (40) en aval de l'entrée (18).

10. Système propulsif (1) selon la revendication 9, dans lequel le bossage (40) s'étend jusqu'à la section de compression (4).

11. Système propulsif selon l'une des revendications 1 à 10, comprenant en outre un joint hydraulique (15) tournant multipassage positionné au niveau de l'arbre de soufflante (13), en amont du mécanisme de réduction (12).

12. Système propulsif (1) selon la revendication 11, dans lequel les satellites (28) sont montés sur un porte-satellites (21) et le système propulsif (1) comprend en outre un réservoir d'huile et au moins une canalisation passant par le porte-satellites (21) et configurée pour alimenter en huile le mécanisme de réduction (12).

13. Système propulsif (1) selon l'une des revendications 1 à 12, dans lequel le mécanisme de réduction présente un rapport de réduction supérieur ou égal à 2.

14. Système propulsif (1) selon l'une des revendications 1 à 13 présentant un taux de dilution supérieur ou égal à 10 et inférieur ou égal à 80.

15. Aéronef comprenant un système propulsif (1) aéronautique selon l'une des revendications 1 à 14.

## Patentansprüche

1. Aeronautisches Antriebssystem (1), umfassend:
- eine Antriebswelle (10), die um eine Drehachse (X) drehbeweglich ist,
- ein Gebläse (2),
- eine Gebläsewelle (13), die so konfiguriert ist, dass sie das Gebläse um die Rotationsachse (X) drehend antreibt,
- einen Untersetzungsmechanismus (12), der die Antriebswelle (10) und die Gebläsewelle (13) koppelt,
- einen Kompressionsabschnitt (4), der von der Antriebswelle (10) drehend angetrieben wird,
- einen Einlasskanal (3), der sich zwischen dem Gebläse (2) und dem Kompressionsabschnitt (4) erstreckt, wobei der Einlasskanal einen Innenring (16) und einen Außenring (17) umfasst, die zusammen einen Lufteinlasskanal in den Kompressionsabschnitt (4) begrenzen, wobei der Innenring (16) einen vorgestimmten minimalen Radius (R2) aufweist,
- wobei der Untersetzungsmechanismus (12) zwei Untersetzungsstufen mit mindestens zwei Satelliten (28) umfasst, die umfangmäßig um die Drehachse (X) verteilt sind, wobei jeder Satellit (28) einen ersten Abschnitt (38), der mit der Antriebswelle (10) in Eingriff steht, und einen zweiten Abschnitt (39), der mit der Gebläsewelle (13) in Eingriff steht, umfasst,
- wobei jeder Satellit (28) in Bezug auf den Innenring (16) des Einlassgehäuses (3) fest angebracht ist,
wobei das Antriebssystem (1) **dadurch gekennzeichnet ist, dass**:
jeder Satellit (28) einen vorbestimmten maximalen Radius (R1) aufweist, wobei der maximale Radius (R1) größer ist als der minimale Radius (R2) des Innenrings (16) des Einlasskanals (3), so dass sich der Lufteinlasskanal zumindest teilweise zwischen den beiden Satelliten (28) erstreckt.

2. Antriebssystem nach Anspruch 1, wobei das Einlassgehäuse (3) einen Einlass (18) benachbart zum Gebläse (2) und einen Auslass (20) benachbart zum Kompressionsabschnitt (4) aufweist, wobei ein Sektor des Außenrings (17) des Einlassgehäuses (3) in einer radialen Ebene zur Drehachse (X) im Bereich des Einlasses (18) etwa kreisförmig ist.

3. Antriebssystem nach einem der Ansprüche 1 oder 2, wobei ein Durchgang (34) des Lufteinlasskanals um die Drehachse (X) herum diskontinuierlich ist.

4. Antriebssystem nach Anspruch 3, wobei der Untersetzungsmechanismus (12) in einem Gehäuse (26) untergebracht ist, wobei das Gehäuse (23) mit dem Innenring (16) des Einlasskanals (3) einstückig ist.

5. Antriebssystem nach Anspruch 4, wobei das Gehäuse (23) des Untersetzungsmechanismus (12) im Bereich jedes Satelliten (28) eine Reihe von Verdickungen (25) aufweist, die jeweils so konfiguriert sind, dass sie einen zugehörigen Satelliten (28) aufnehmen.

6. Antriebssystem nach Anspruch 5, wobei die Verdickungen (25) durch ringsektorförmige Abschnitte (26) des Gehäuses (23) paarig verbunden sind.

7. Antriebssystem nach einem der Ansprüche 5 oder 6, wobei das Gehäuse (23) des Untersetzungsmechanismus (12) mit dem Außenring (17) über Tragarme (36) verbunden ist, die sich von den Verdickungen (25) aus erstrecken.

8. Antriebssystem nach einem der Ansprüche 6 oder 7, wobei die Verdickungen (25) eine Ringsektorform aufweisen, von der ein Radius (R3) größer ist als der Radius der Abschnitte (26) des Gehäuses (23), die sich zwischen den Verdickungen (25) erstrecken.

9. Antriebssystem nach einem der Ansprüche 1 bis 8, wobei der Teil des Innenrings (16) des Gehäuses (23) des Einlasses (3), der sich zwischen zwei benachbarten Satelliten (28) erstreckt, stromabwärts vom Einlass (18) einen Vorsprung (40) aufweist.

10. Antriebssystem (1) nach Anspruch 9, wobei sich der Vorsprung (40) bis zum Kompressionsabschnitt (4) erstreckt.

11. Antriebssystem nach einem der Ansprüche 1 bis 10, das ferner eine hydraulische Mehrpass-Drehverbindung (15) umfasst, die im Bereich der Gebläsewelle (13) stromaufwärts des Untersetzungsmechanismus (12) positioniert ist.

12. Antriebssystem (1) nach Anspruch 11, wobei die Satelliten (28) auf einem Satellitenträger (21) angebracht sind und das Antriebssystem (1) ferner einen Ölvorratsbehälter und mindestens eine Leitung umfasst, die durch den Satellitenträger (21) verläuft und so konfiguriert ist, dass sie den Untersetzungsmechanismus (12) mit Öl versorgt.

13. Antriebssystem (1) nach einem der Ansprüche 1 bis 12, wobei der Untersetzungsmechanismus ein Untersetzungsverhältnis von größer oder gleich 2 aufweist.

14. Antriebssystem (1) nach einem der Ansprüche 1 bis 13, das ein Verdünnungsverhältnis von größer oder gleich 10 und kleiner oder gleich 80 aufweist.

15. Luftfahrzeug, das ein aeronautisches Antriebssystem (1) nach einem der Ansprüche 1 bis 14 aufweist.

## Claims

1. Aeronautical propulsion system (1) comprising :
a drive shaft (10) rotatable about an axis of rotation (X),
- a fan (2),
- a fan shaft (13) configured to drive the fan in rotation about the axis of rotation (X),
- a reduction mechanism (12) coupling the drive shaft (10) and the fan shaft (13
- a compression section (4) driven in rotation by the drive shaft (10),
- an inlet duct (3) which extends between the fan (2) and the compression section (4), the inlet duct comprising an inner shroud (16) and an outer shroud (17) together delimiting a stream of air entering the compression section (4), the inner shroud (16) having a predetermined minimum radius (R2),
- the reduction mechanism (12) comprising two reduction stages comprising at least two satellites (28) distributed circumferentially around the axis of rotation (X), each satellite (28) comprising a first portion (38) meshed with the drive shaft (10) and a second portion (39) meshed with the fan shaft (13),
- each satellite (28) being fixedly mounted with respect to the inner shroud (16) of the inlet casing (3), the propulsion system (1) being **characterised in that**:
each satellite (28) has a predetermined maximum radius (R1), said maximum radius (R1) being greater than the minimum radius (R2) of the inner shroud (16) of the inlet duct (3) so that the air inlet stream extends at least partially between the two satellites (28)

2. Propulsion system of claim 1, wherein the inlet casing (3) has an inlet (18) adjacent the fan (2) and an outlet (20) adjacent the compression section (4), a section of the outer shroud (17) of the inlet casing (3) in a plane radial to the axis of rotation (X) being substantially circular at the inlet (18).

3. Propulsion system according to one of claims 1 or 2, wherein a passage (34) of the air inlet stream is discontinuous about the axis of rotation (X).

4. Propulsion system as claimed in claim 3, wherein the reduction mechanism (12) is housed in a casing (26), said casing (23) being integral with the inner shroud (16) of the inlet channel (3).

5. Propulsion system according to claim 4, wherein the casing (23) of the reduction mechanism (12) comprises, at each satellite (28), a series of bulges (25) which are each configured to house an associated satellite (28).

6. Propulsion system as claimed in claim 5, wherein the bulges (25) are connected in pairs by portions (26) of the casing (23) in the form of a ring sector.

7. Propulsion system according to one of claims 5 or 6, wherein the casing (23) of the reduction mechanism (12) is connected to the outer shroud (17) via support arms (36) extending from the bulges (25).

8. Propulsion system according to one of claims 6 or 7, wherein the bulges (25) have the shape of a ring of a, a radius (R3) of which is greater than the radius of the portions (26) of casing (23) which extend between the bulges (25).

9. Propulsion system according to one of claims 1 to 8, wherein the part of the inner shroud (16) of the inlet (3) casing (23) which extends between two adjacent satellites (28) has a boss (40) downstream of the inlet (18).

10. Propulsion system (1) as claimed in claim 9, wherein the boss (40) extends to the compression section (4).

11. Propulsion system according to any one of claims 1 to 10, further comprising a multi-pass rotating hydraulic seal (15) positioned at the fan shaft (13), upstream of the reduction mechanism (12).

12. Propulsion system (1) according to claim 11, wherein the satellites (28) are mounted on a planet carrier (21) and the propulsion system (1) further comprises an oil tank and at least one pipeline passing through the planet carrier (21) and configured to supply oil to the reduction mechanism (12).

13. Propulsion system (1) according to one of claims 1 to 12, wherein the reduction mechanism has a reduction ratio greater than or equal to 2.

14. Propulsion system (1) according to one of claims 1 to 13 having a bypass ratio greater than or equal to 10 and less than or equal to 80.

15. Aircraft comprising an aeronautical propulsion system (1) according to one of claims 1 to 14.
